# NEUE EUROPÄISCHE PATENTSCHRIFT

(11) **EP 2 250 121 B2**
(45) Veröffentlichungstag und Bekanntmachung des Hinweises auf die Entscheidung über den Einspruch: **23.11.2022**
(45) Hinweis auf die Patenterteilung: 22.03.2017
(21) Anmeldenummer: 09711064.7
(22) Anmeldetag: 11.02.2009
(51) Int. Cl.: B67C 3/00

(54) **BEHANDLUNGSANLAGE, INSBESONDERE FÜR BEHÄLTNISSE MIT RÜCKWIRKENDER KORREKTURMÖGLICHKEIT**
HANDLING INSTALLATION, IN PARTICULAR FOR CONTAINERS, WITH A RETROACTIVE CORRECTION CAPABILITY
ÉQUIPEMENT DE TRAITEMENT, NOTAMMENT POUR DES RÉCIPIENTS, POURVU D'UNE POSSIBILITÉ DE CORRECTION À EFFET RÉTROACTIF

(30) Priorität: 11.02.2008 DE 102008008528
(43) Veröffentlichungstag der Anmeldung: 17.11.2010
(73) Patentinhaber: Krones AG, 93073 Neutraubling (DE)
(72) Erfinder: ZECH, Thomas, 93093 Donaustauf (DE)
(74) Vertreter: Bittner, Bernhard
(86) Internationale Anmeldenummer: PCT/EP2009/051519
(87) Internationale Veröffentlichungsnummer: WO 2009/101087

(56) Entgegenhaltungen:
- DE-A1- 4 332 645
- US-A- 4 691 496

## Beschreibung

Die vorliegende Erfindung bezieht sich auf eine Vorrichtung zum Behandeln von Behältnissen. Derartige Vorrichtungen sind aus dem Stand der Technik bekannt. So ist es bekannt, dass im Rahmen von geblockten Anlagen, d.h. Anlagen, deren Arbeitseinheiten aufeinander synchronisiert sind, zunächst Vorformlinge erwärmt und anschließend zu Behältnissen expandiert werden. Diese expandierten Behältnisse werden in der Folge gereinigt und schließlich mit einem Getränk befüllt.

Die WO 00/078664 A1 beschreibt eine Abfüllvorrichtung der Flaschen. Dabei sind eine Blasmaschine zum Herstellen der Flaschen, eine Spülmaschine zum Reinigen der fertig geblasenen Flaschen und eine Füllmaschine zum Befüllen der Flaschen synchron zueinander antreibbar und es werden die Flaschen durch formschlüssige Transportelemente teilungsgerechtzwischen den Maschinen überführt.

Aus der WO 2006/097243 A2 sind ein Verfahren und eine Vorrichtung betreffend das sterile Befüllen von Flüssigkeiten bekannt. Dabei werden die Flaschen zunächst mit H₂O₂ sterilisiert und anschließend befüllt.

Die DE 10 2005 060 814 A1 offenbart eine Vorrichtung und ein Verfahren zum Formblasen von Behältnissen. Dabei ist eine Inspektionseinrichtung zur Informationsübermittlung mit einer in der Transportrichtung der Behältnisse stromabwärts angeordneten Formblaseinrichtung verbunden, sodass als fehlerhaft erkannte Vorformlinge nicht zu Behältern geblasen werden. Damit werden hier bestimmte Behältnisse als fehlerhaft erkannt und zu einem späteren Zeitpunkt wird die weitere Behandlung dieser Behältnisse unterbrochen.

Die DE 102 59 589 B3 beschreibt ein Verfahren und eine Vorrichtung zum Herstellen von Hohlkörpern aus Kunststoff. Dabei werden Vorformlinge vor dem Erwärmen kontrolliert und es wird zumindest ein Teil der fehlerhaften Vorformlinge erwärmt und erst nach dem Erwärmen ausgeschieden.

Die US 4,691,496 offenbart eine Vorrichtung gemäß dem Oberbegriff des Anspruchs 1.

Bei derartigen geblockten, d. h. insbesondere aufeinander synchronisierten Anlagenteilen besteht jedoch des Öfteren das Problem, dass in einem stromabwärts liegenden Anlagenteil ein Fehler vorliegt, beispielsweise bei einer Füllmaschine ein einzelnes Ventil defekt ist und daher ein entsprechendes Behältnis nicht korrekt befüllt werden kann. Bei Anlagen aus dem Stand der Technik führt dies zu einer erheblichen Verschwendung. Einerseits wird das entsprechende Behältnis unnötigerweise erzeugt, bzw. unnötigerweise sterilisiert. Außerdem geht auch des Öfteren der abzufüllende Inhalt verloren, da, wie gesagt, fehlerhaft abgefüllt wurde und dieses Behältnis ausgeschieden wird. Der vorliegenden Erfindung liegt daher die Aufgabe zugrunde, eine Vorrichtung zu schaffen, welche einen wirtschaftlicheren Betrieb ermöglicht.

Dies wird erfindungsgemäß durch eine Vorrichtung nach Anspruch 1 erreicht.

Vorteilhafte Ausgestaltungen sind Gegenstand der Unteransprüche.

Eine erfindungsgemäße Vorrichtung zum Behandeln von Behältnissen weist unter andere eine erste Behandlungseinheit auf, welche die Behältnisse in einer ersten vorgegebenen Weise behandelt. Weiterhin ist eine zweite Behandlungseinheit vorgesehen, welche in der Transportrichtung der Behältnisse stromabwärts bezüglich der ersten Behandlungseinheit angeordnet ist, wobei die zweite Behandlungseinheit eine Vielzahl von Behandlungselementen zum Behandeln der Behältnisse aufweist. Erfindungsgemäß weist die zweite Behandlungseinheit wenigstens eine Zustandserkennungseinrichtung auf, welche einen atypischen Zustand wenigstens eines Behandlungselements und eines von diesem Behandlungselement behandelten Behältnisses erkennt, sowie wenigstens eine Steuerungseinrichtung, welche diesem Behandlungselement oder dem von diesem Behandlungselement behandelten Behältnis wenigstens ein stromaufwärts bezüglich dieses Behandlungselements zu behandelndes Behältnis zuordnet.

Die Begriffe "stromaufwärts" und "stromabwärts" werden unter Bezugnahme auf die Förder- bzw. Transportrichtung der Behältnisse, wie beispielsweise der Flaschen, durch die Vorrichtung verstanden. Unter einem Behandeln der Flaschen wird jeder Vorgang verstanden, der die Behältnisse in irgendeiner Weise beeinflusst insbesondere eine Erwärmung der Behältnisse, ein Expandieren von Vorformlingen zu Behältnissen, ein Desinfizieren von Behältnissen, ein Spülen von Behältnissen, ein Abfüllen von Behältnissen, ein Verschließen, ein Etikettieren und/oder Bedrucken von Behältnissen aber auch ein Transport der Behältnisse sowohl in vereinzelter Form als auch in nicht vereinzelter Form. Unter einer Zustandserkennungseinrichtung wird eine Einrichtung verstanden, welche einen physikalischen Zustand der Behandlungseinheit bzw. des Behandlungselements oder des Behältnisses .erfasst, wie beispielsweise die Funktionsfähigkeit eines Ventils, die Funktionsfähigkeit oder den Öffnungszustand eines Greifelements, eines Verschließorgans und dergleichen.

Unter einem atypischen Zustand wird ein Zustand verstanden, der von einem normalen Arbeitszustand abweicht. Insbesondere handelt es sich bei dem atypischen Zustand um einen Fehler des Behandlungselements wie beispielsweise ein nicht funktionierendes Ventil eines Rinsers oder einer Füllmaschine, eine nicht funktionierende Greifeinrichtung oder dergleichen. Es wäre jedoch auch möglich, einen atypsichen Zustand des Behältnisses zu erfassen. So ist es teilweise möglich, dass einzelne Behältnisse fehlerhaft ausgebildet sind, diese fehlerhafte Ausbildung jedoch auf einen fehlerhaften Behandlungsvorgang, wie beispielsweise einen fehlerhaften Blasvorgang zurückzuführen ist

Damit wird im Rahmen der vorliegenden Erfindung vorgeschlagen, einen im Rahmen des Behandlungsprozesses später auftretenden Fehlerfestzustellen und in der Folge insbesondere zu bestimmen, welchen noch im Behandlungsvorgang früher befindlichen Behältnissen dieser Fehler zugeordnet wird. So ist es beispielsweise möglich, dass ein bestimmtes Ventil der Befüllungsanlage defekt ist. Erfindungsgemäß wird ermittelt, welche noch stromaufwärts befindlichen Behältnisse im weiteren Verfahrenslauf genau diesem Ventil zugeordnet werden. Diese Behältnisse können anschließend in besonderer Weise behandelt werden, beispielsweise bereits vorab ausgeschleust werden. Auf diese Weise ist es möglich, auftretende Verschwendungen, wie beispielsweise unnötig sterilisierte Behältnisse oder unnötig befüllte Behältnisse zu vermeiden. So kann eine gezielte Lücke bei dem funktionsunfähigen bzw. nicht ordnungsgemäß arbeitenden Ventil geschaffen werden.

Auf diese Weise wird weniger Materialverlust verursacht, eine Charge kann fertig produziert und der Fehler kann später behoben werden, was insbesondere bei Sterilanlagen von Vorteil sein kann. Damit muss ein entsprechender Off-Set so berechnet werden, dass eine Lücke beispielsweise genau auf die defekte Füllstation trifft. Im Stand der Technik wurde bislang eine nicht korrekt befüllte Flasche nach der Vorrichtung über ein Kontrollsystem erkannt und ausgeschieden, was einen erhöhten Materialverlust (Preform. Produkt, evtl. Verschluss und Etikett) zur Folge hat.

Bei der erfindungsgemäßen Ausführungsform weist die Vorrichtung eine Aussonderungseinrichtung auf, welche das von dem Behandlungselement zu behandelnde Behältnis aussondert. Damit wird dasjenige Behältnis vorab ausgesondert, welches später auf das defekte Behandlungselement treffen würde. Unter Behältnissen werden hier sowohl die fertig geblasenen Behältnisse als auch etwaige Vorstufen wie Vorformlinge verstanden. Beispielsweise wäre es möglich, eine Preform-Sperre vorzusehen, welche bestimmte Preforms aussondert. Dabei wird darauf hingewiesen, dass die Preforms beispielsweise über eine Staustrecke zugeführtwerden und die eigentliche Eintaktung erst am Ende dieser Staustrecke beginnt. An diesem Bereich kann ein Aussonderungsmechanismus vorgesehen sein.

Bei einer weiteren bevorzugten Ausführungsform bewirkt die Steuerungseinrichtung dass jedes n-te Behältnis ausgesondert wird, wobei n die Anzahl der zweiten Behandlungselemente ist. Falls beispielsweise das Füllventil Nr. 56 (von 120 insgesamt) defekt ist und über-oder unterfüllte Flaschen liefert, wird aufdiese Weise jeder 120te Pre-Form nicht in den Block gelassen, der später zum Füllventil 56 gelangen würde. Es wären jedoch auch andere Möglichkeiten der Aussonderungen möglich, so könnten beispielsweise die Behältnisse zunächst geblasen und anschließend ausgesondert werden. In dem vorliegenden Fall wird beispielsweise jede 120te Flasche ausgesondert werden. Bei einer Arbeitsleistung von beispielsweise 36000 Flaschen pro Stunde würden auf diese Weise insgesamt 300 Flaschen pro Stunde ausgeschleust werden, d. h. diese Flaschen müssten nicht unnötigerweise sterilisiert, befüllt, verschlossen und etikettiert werden. Auf diese Weise kann eine erhebliche Reduzierung von Materialverlust erreicht werden. Der Produktionsverlust kann trotzdem geringer sein, als bei einem längeren Stopp der Anlage zum Beheben der Störung während dem Betrieb, insbesondere, wenn dann eine Neusteritisterung der Anlage erforderlich werden sollte. Solche Arbeiten können dann am Schichtende erfolgen.

Bei der erfindungsgemäßen Ausführungsform ist die Aussonderungseinrichtung stromaufwärts bezüglich der zweiten Behandlungseinheit angeordnet, d. h. in der Bewegungsrichtung der Behältnisse vor der zweiten Behandlungseinheit. Auf diese Weise kann, wie oben erwähnt, eine Reduzierung von Verlusten erreicht werden.

Bei einer weiteren vorteilhaften Ausführungsform handelt es sich bei der zweiten Behandlungseinheit um eine Befüllungseinrichtung für die Behältnisse. Es wäre jedoch auch möglich, dass es sich bei der zweiten Behandlungseinheit um eine Sterilisationseinrichtung, eine Blaseinrichtung, eine Wascheinrichtung oder Verschließeinrichtung für Behältnisse oder dergleichen handelt.

Bei der erfindungsgemäßen Ausführungsform handelt es sich bei der ersten Behandlungseinheit um eine Transporteinrichtung für die Vorformlinge wobei unter einer Transporteinrichtung hierauch eine Staustrecke verstanden wird, entlang derer die Behältnisse bzw. die Vorformlinge (ggfs auch nicht vereinzelt) geführt werden. Weiterhin könnte es jedoch bei der ersten Behandlungseinheit auch um eine Heizeinrichtung für Vorformlinge, eine Blaseinrichtung für die Vorformlinge, eine Reinigungseinrichtung oder eine Desinfektionseinrichtung für die Behältnisse und dergleichen handeln.

Bei einer weiteren vorteilhaften Ausführungsform weist die Vorrichtung eine Pufferungseinheit für ausgesonderte Behältnisse auf. Wie oben erwähnt, wäre es möglich, bereits bestimmte Vorformlinge auszusondern. Dies würde jedoch dazu führen, dass aufgrund der genau dimensionierten Heizparameter auch der vor dem ausgesonderten und der nach dem ausgesonderten Vorformling liegende Vorformling (Preform) (nach dem Heizvorgang) ausgesondert werden müsste. Aus diesem Grunde wird in einer bevorzugten Ausgestaltung vorgeschlagen, sämtliche Behältnisse zunächst blasen zu lassen dann jedoch das genau identifizierte Behältnis auszusondern und in einer Pufferungseinheit unterzubringen. Aus dieser Pufferungseinheit können die Behältnisse später wieder entnommen werden, sodass auf diese Weise eine weitere Reduzierung von Verlusten erreicht werden kann. Bei einer weiteren vorteilhaften Ausführungsform weist die erste Behandlungseinheit eine Vielzahl von Behandlungselementen auf. Dabei kann es sich beispielsweise um Greifelemente handeln, welche die Behältnisse entlang eines vorbestimmten Pfades führen. In diesem Fall kann beispielsweise ein bestimmtes Behandlungselement identifiziert werden, welches anschließend das von ihm gehaltene Behältnis aussondert.

Es wird weiterhin ein nicht beanspruchtes Verfahren zum Behandeln von Behältnissen beschrieben, wobei die Behältnisse in einer ersten Behandlungseinheit in einer ersten vorgegebenen Weise behandelt werden und anschließend in einer zweiten Behandlungseinheit mit einer Vielzahl von Behandlungselementen in einer zweiten vorgesehenen Weise behandelt werden. Weiterhin wird ein atyischer Zustand wenigstens eines Behandlungselements oder eines von diesem Behandlungselement behandelten Behältnis erkannt und diesem Behandlungselement oder dem von diesem Behandlungselement behandelten Behältnis wenigstens ein stromaufwärts bezüglich dieses Behandlungselements zu behandelndes Behältnisses zugeordnet. Damit wird auch damit bei dem Verfahren ein stromaufwärts stattfindender Eingriff vorgeschlagen, der im weiteren Arbeitsverlauf der Maschine bewirken kann, dass das defekte Behandlungselement keine weiteren unnötigen Verluste produziert.

Vorteilhaft wird das von dem ersten Behandlungselement künftig zu behandelnde Behältnis ausgesondert.

Vorzugsweise werden all diejenigen Behältnisse ausgesondert, die künftig von dem (betreffenden, als atypisch arbeitend erkannten) Behandlungselement behandelt würden. Dabei werden insbesondere bei Erkennen eines Fehlers sämtliche Behältnisse ausgesondert, die künftig an dieses spezielle Behandlungselement gelangen würden, welches somit funktionslos geschaltet werden kann.

Vorzugweise werden die auzusondernden Behältnisse nach einem Heizvorgang für die Behältnisse ausgesondert. Bei einer weiteren vorteilhaften Ausführungsform werden die auszusondernden Behältnisse nach dem Blasvorgang ausgesondert, und besonders bevorzugt in einer Pufferungseinrichtung angeordnet bzw. gesammelt. Dadurch kann vorteilhafterweise bei kurzzeitigen Stopps der Blasmaschine der nachgelagerte Teil der Anlage aus dem Puffer versorgt werden.

Weitere Vorteile und Ausführungsformen ergeben sich aus den beigefügten Figuren:

Darin zeigen:
- Fig. 1: eine erfindungsgemäße Vorrichtung in einer ersten Ausführungsform; und
- Fig. 2: eine erfindungsgemäße Vorrichtung in einer zweiten Ausführungsform.

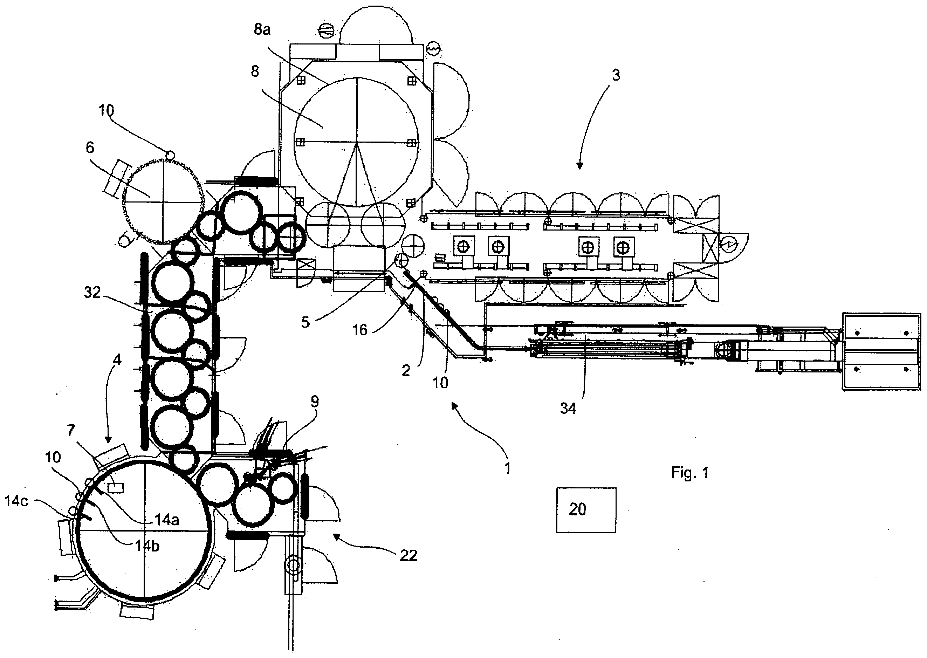

Fig. 1 zeigt eine erfindungsgemäße Vorrichtung 1 zum Behandeln von Behältnissen 10. Dabei bezieht sich das Bezugszeichen 2 auf eine erste Behandlungseinheit in Form einer Transporteinrichtung 2. Diese Transporteinrichtung 2 ist hler als Rutsche ausgeführt, entlang derer Behältnisse 10 bzw. Ketten von Behältnissen transportiert werden. In diesem Bereich sind die Behältnisse noch nicht auf Abstand vereinzelt. Stromaufwärts bezüglich dieser ersten Behandlungseinheit kann ein Magazin oder auch ein Sortierer 34 für die Behältnisse vorgesehen sein, der die Behältnisse in eine bestimmte einheitliche Ausgangslage verbringt. Im vorliegenden Fall sind die Behältnisse Preformen aus Kunststoff, aus denen im weiteren Produktionsverlauf Flaschen hergestellt werden.

Das Bezugszeichen 5 bezieht sich auf ein Eintaktrad, welches die Behältnisse an eine (nicht gezeigte) Transporteinrichtung übergibt, wobei diese Transporteinrichtung die Behältnisse bzw. Vorformlinge durch eine Heizeinrichtung 3 fördert. Die Transporteinrichtung kann beispielsweise als eine Kette mit Dornen zum Aufstecken der Behältnisse ausgebildet sein. Ab diesem Eintaktrad 5 werden die Behältnisse vereinzelt geführt. Unmittelbar an oder bei diesem Eintaktrad 5 ist eine Aussonderungseinrichtung 16 vorgesehen, welche einzelne Behältnisse 10 gesteuert aussondern kann. Auf diese Weise können gezielt Lücken auf der Transportbahn der Behältnisse erzeugt werden. Die Behältnisse werden anschließend, wie oben erwähnt, durch die Heizeinrichtung 3 gefördert und dort erwärmt. Die Transporteinrichtung der Heizeinrichtung 3 weist dabei bereits erwähnte Halteelemente für die Behältnisse, beispielsweise in Form von Dornen auf. Entsprechende Heizeinrichtungen sind beispielsweise aus DE 203 11 657 U bekannt.

Anschließend werden die Behältnisse an eine Blaseinrichtung 8 übergeben, wobei diese Blaseinrichtung ein Blasrad 8a mit einer Vielzahl von daran angeordneten Blasstationen aufweist.

Nachdem in dieser Blasstation die Vorformlinge zu Behältnissen (Kunststoffflaschen) expandiert worden sind, werden diese an eine Spüleinheit 6 übergeben. In dieser Spüleinheit 6 (auch als Rinser bezeichnet) werden die bereits erzeugten Behältnisse 10 mit Klarwasser gespült. An diese Spüleinheit schließt sich eine Vielzahl von Transportsternen oder Transporträdern 32an, wobei in diesem Bereich auch eine Innen- bzw. Außendesinfektion der Behältnisse beispielsweise mit H₂O₂ oder dergleichen stattfindet.

Das Bezugszeichen 4 bezieht sich auf eine Fülleinrichtung, die eine Vielzahl von Behandlungselementen 14a, 14b, 14c zum Befüllen der Behältnisse aufweist. An diese Fülleinrichtung schließt sich noch eine Verschließeinrichtung 9 an, die die bereits befüllten Behältnisse verschließt.

Das Bezugszeichen 7 kennzeichnet eine (nur schematisch dargestellte) Zustandserkennungseinrichtung, welche Zustände der Behandlungselemente erfasst, wie insbesondere aber nicht ausschließlich Fehlerzustände. Auch wäre es möglich, dass jedem Behandlungselement 14a, 14b, 14c eine derartige Zustandserkennungseinrichtung zugeordnet ist oder auch, dass jedem Behandlungselement 14a, 14b, 14c mehrere Zustandserkennungseinrichtungen 7 zugeordnet sind, die unterschiedliche Zustände des Behandlungselements erfassen.

Bei der Zustandserkennungseinrichtung 7 kann es sich beispielsweise um einen Durchflusssensor handeln, der erfasst, ob ein bestimmtes Füllventil zum richtigen Zeitpunkt die richtige Menge an Flüssigkeit in das Behältnis 10 füllt. Auch könnte es sich bei der Zustandserkennungseinrichtung 7 um einen Sensor handeln, der bestimmte Parameter des behandelten Behältnisses erfasst wie z.B. einen Sensor, der eine Überfüllung des Behältnisses mit dem Getränk feststellt. Derartige Zustandserkennungseinrichtungen könnten auch an anderen Behandlungseinheiten vorgesehen sein wie beispielsweise einer Desinfektionseinheit. Eine solche Füllstandskontrolleinrichtung kann ggf. auch im Bereich nach der Füll- und/oder Verschießmaschine angeordnet sein.

In der Folge könnte noch eine (nicht gezeigte) Etikettiereinrichtung für die bereits befüllten Behältnisse vorgesehen sein.

Damit werden die Behältnisse 10, wie oben erwähnt, ab dem Eintaktstern 5 vereinzelt transportiert und sind damit identifizierbar sowie für den weiteren Verlauf mittels einer Steuerung verfolgbar. Falls beispielsweise an dem Behandlungselement 14a eine wiederkehrende Fehlfunktion bzw. Defekt festgestellt wird, kann mit Hilfe einer Prozessoreinrichtung 20 ermittelt werden, welche Behältnisse bei jeder Umdrehung der Fülleinrichtung 4 künftig zu diesem defekten Behandlungselement bzw. Füllelement 14a gelangen werden. Dies geschieht in Verbindung mit den in den Maschinen vorhandenen Drehstellungsgebern. Diese entsprechenden Behältnisse können über die Aussonderungseinrichtung 16 ausgesondert oder durch Sperren am Einlaufen gehindert werden und damit kann stromaufwärts bezüglich der Fülleinrichtung 4 gezielt gesteuert eine Lücke erzeugt werden, die später exakt auf das stromabwärts liegende defekte Füllelement bzw. Behandlungselement 14a trifft. Damit werden in einer kontinuierlichen Abfolge von Behältnissen bewusst Lücken erzeugt, wobei diese Lücken gezielt stromaufwärts bezüglich eines als defekt festgestellten Behandlungselements erzeugt werden. Bei der Aussonderungseinrichtung kann es sich um einen Klappenmechanismus oder eine Sperre handeln, der/die in der Lage ist, einzelne Behältnisse aus einem Strom von Behältnissen auszusondern bzw. Lücken zu erzeugen.

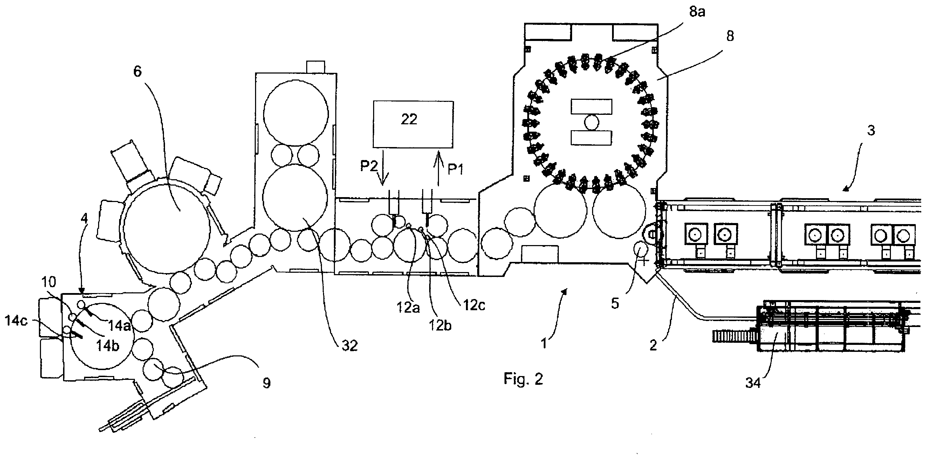

Fig. 2 zeigt eine weitere Ausführungsform einer erfindungsgemäßen Vorrichtung. Diese weist ebenfalls die auch in Fig. 1 gezeigten Hauptelemente auf, wie eine Heizeinrichtung 3, eine Blaseinrichtung 8, eine Entkeimungseinrichtung 32, eine Klarwasserspüleinrichtung 6 sowie eine Fülleinrichtung 4, der eine Verschließeinrichtung 9 nachgeordnet ist. Im Gegensatz zu der in Fig. 1 gezeigten Ausführungsform werden hier die Behältnisse 10 nicht stromaufwärts bzw. vor der Heizeinrichtung 3 bzw. vor der Blaseinrichtung 8 ausgesondert, sondern die Behältnisse werden zunächst durch die Heizeinrichtung 3 geführt, anschließend in der Blaseinrichtung 8 geblasen und bei Erkennen eines Defekts eines Behandlungselements 14a erst stromabwärts bzw. nach der Blaseinrichtung entlang des Pfeils P1 in eine Pufferstrecke 22 ausgeleitet.

Damit werden bei dieser Ausführungsform zunächst fertige Behältnisse erzeugt, diese jedoch im Anschluss nicht weiter behandelt, sondern in fertig geblasenem Zustand entnommen und gespeichert. Bei dieser Ausführungsform werden gezielt bestimmte Behandlungselemente 12a, 12b oder 12c angesprochen, welche die von ihnen gehaltenen Behältnisse freigeben, z.B. in die vorgenannte Pufferstrecke 22. Damit werden bei dieser Ausführungsform den Behandlungselementen 14a, 14b, 14c insbesondere im Fehlerfall bestimmte Behandlungselemente 12a, 12b, 12c zugeordnet, welche diejenigen Behältnisse führen, die im weiteren Behandlungsablauf der Anlage zu einem defekten Behandlungselement 14a, 14b oder 14c gelangen würden.

Bei der in den Figuren 1 und 2 gezeigten Ausführungsform ist die zweite Behandlungseinheit die Fülleinrichtung 4. Es wäre jedoch auch möglich, dass es sich bei der zweiten Behandlungseinheit 4 um eine andere Einheit, wie beispielsweise die Entkeimungseinrichtung 32, den Rinser bzw. die Klarwasserspüleinrichtung 6, die Verschließeinrichtung 9 oder die Blaseinrichtung 8 handelt.

Die entlang des Pfeils P1 ausgesonderten Behältnisse können später bei Behebung des Fehlers der Anlage oder einer Störung der Blaseinrichtung 8 wieder zugeführt (Pfeil P2) werden, wobei diese Behältnisse dann zunächst entkeimt, mit Klarwasser gespült und schließlich mit einem Getränk befüllt und dann verschlossen werden. Das Bezugszeichen 22 bezieht sich auf eine entsprechende Pufferungseinheit, in der die Behältnisse 10 zwischengespeichert werden.

Das Durchschleusen einer bewusst erzeugten Lücke im Behälterstrom und Sperren bzw. Inaktivschalten aller mit der Lücke nachfolgend zusammentreffenden Behandlungsorgane ist insbesondere in Verbindung mit elektrisch oder elektropneumatisch gesteuert betätigbaren Ventilen in Rinsern und Füllmaschinen problemlos durch eine vorausschauende Positionsverfolgung der Lücke durch die Anlagensteuerung realisierbar. Auch eine gezielte Sperrung der Verschluss- oder Etikettenzuführung Ist mit den bestehenden Steuerungsgeräten durchführbar.

## Patentansprüche

1. Vorrichtung zum Behandeln von Behältnissen (10) mit einer ersten Behandlungseinheit (2), welche die Behältnisse (10) in einer ersten vorgegebenen Weise behandelt, und mit einer zweiten Behandlungseinheit (4), welche in der Transportrichtung der Behältnisse (10) stromabwärts bezüglich der ersten Behandlungseinheit (2) angeordnet ist, wobei die zweite Behandlungseinheit eine Vielzahl von Behandlungselementen (14a, 14b, 14c) zum Behandeln der Behältnisse (10) aufweist, wobei die zweite Behandlungseinheit (4) wenigstens eine Zustandserkennungseinrichtung (7) aufweist, welche einen atypischen Zustand wenigstens eines Behandlungselements (14a) oder eines von diesem Behandlungselement behandelten Behältnisses erkennt, d.h. ein Fehler des Behandlungselements oder eine fehlerhafte Ausbildung eines Behältnisses, sowie wenigstens eine Steuerungseinrichtung (20) aufweist, welche diesem Behandlungselement (14a) oder dem von diesem Behandlungselement (14a) behandelten Behältnis wenigstens ein stromaufwärts bezüglich dieses Behandlungselements (14a) zu behandelndes Behältnis (10) zuordnet,
**dadurch gekennzeichnet, dass**
die erste Behandlungseinheit (2) eine Heizeinrichtung für Vorformlinge, Blaseinrichtung für Behältnisse, Transporteinrichtung für Vorformlinge, oder eine Reinigungs- oder Desinfektionseinrichtung für Behältnisse ist, und dass die Vorrichtung eine, in der Transportrichtung der Behältnisse stromaufwärts der zweiten Behandlungseinheit (4) angeordnetes, Aussonderungseinrichtung (16) aufweist, welche dasjenige von dem Behandlungselement (14a) zu behandelnde Behältnis aussondert, welches später auf das defekte Behandlungselement der zweiten Behandlungseinheit (4) treffen würde, so dass gezielt eine Lücke im Behälterstrom geschaffen wird, wobei die Steuerungseinrichtung bewirkt, dass ein entsprechender Off-Set so berechnet wird, dass die Lücke genau auf ein defektes Behandlungselement trifft.

2. Vorrichtung nach Anspruch 1,
**dadurch gekennzeichnet, dass**
die Steuerungseinrichtung (20) bewirkt, dass jedes n-te Behältnis (10) ausgesondert wird, wobei n die Anzahl der zweiten Behandlungselemente (14a, 14b, 14c) ist.

3. Vorrichtung nach wenigstens einem der vorangegangenen Ansprüche,
**dadurch gekennzeichnet, dass**
die erste Behandlungseinheit (2) und die zweite Behandlungseinheit (4) aufeinander synchronisiert sind.

4. Vorrichtung nach wenigstens einem der vorangegangenen Ansprüche,
**dadurch gekennzeichnet, dass**
die zweite Behandlungseinheit (4) eine Befüllungseinrichtung (4) für die Behältnisse (10) ist.

5. Vorrichtung nach wenigstens einem der vorangegangenen Ansprüche 2 - 4,
**dadurch gekennzeichnet, dass**
die Vorrichtung eine Pufferungseinheit (22) für ausgesonderte Behältnisse (10) aufweist.

6. Vorrichtung nach wenigstens einem der vorangegangenen Ansprüche 2 - 4,
**dadurch gekennzeichnet, dass**
die erste Behandlungseinheit eine (2) eine Vielzahl von Behandlungselementen (12a, 12b, 12c) zum Behandeln der Behältnisse aufweist.

## Claims

1. A device for the handling of containers (10) with a first handling unit (2) which handles the containers (10) in a first pre-set manner, and with a second handling unit (4), which is arranged downstream with respect to the first handling unit (2) in the conveying direction of the containers (10), wherein the second handling unit has a plurality of handling elements (14a, 14b, 14c) for handling the containers (10), wherein the second handling unit (4) has at least one state-recognition device (7), which recognizes an atypical state of at least one handling element (14a) or one container handled by this handling element i.e. a defect of the handling element or a defective formation of the container, and has at least one control device (20) which assigns to this handling element (14a) or to the container handled by this handling element (14a) at least one container (10) to be handled upstream with respect to this handling element (14a),
**characterized in that**
the first handling unit (2) is a heating device (2) for pre-forms, a blow-moulding device for containers, a transport device for pre-forms, or a cleaning or a disinfecting device for containers, and that the device has a separating device (16), which is located upstream with respect to the second handling unit (4) in a transport direction of the containers, and which separates out the container to be handled by the handling element (14a) which would reach the defective handling element of the second handling unit (4), so that a directed gap in the stream of containers is generated, wherein the control device achieves that a respective Off-Set is calculated in such a way that the gap reaches exactly a defective handling element.

2. A device according to claim 1,
**characterized in that**
the control device (20) causes every n-th container (10) to be separated out, wherein n is the number of the second handling elements (14a, 14b, 14c).

3. A device according to at least one of the preceding claims,
**characterized in that**
the first handling unit (2) and the second handling unit (4) are synchronized with each other.

4. A device according to at least one of the preceding claims,
**characterized in that**
the second handling unit (4) is a bottling device (4) for the containers (10).

5. A device according to at least one of the preceding claims 2 to 4,
**characterized in that**
the device has a buffering unit (22) for separated containers (10).

6. A device according to at least one of the preceding claims 2 to 4,
**characterized in that**
the first handling unit (2) has a plurality of handling elements (12a, 12b, 12c) for handling the containers (10).

## Revendications

1. Dispositif destiné à manipuler des récipients (10) pourvu d'une première unité de manipulation (2) destiné à manipuler les récipients (10) selon une première manière prédéterminée, et pourvu d'une seconde unité de manipulation (4) étant agencée dans la direction de transport des récipients (10) en aval de la première unité de manipulation (2), dans lequel la seconde unité de manipulation présente une pluralité d'éléments de manipulation (14a, 14b, 14c) pour manipuler les récipients (10) dans lequel la seconde unité de manipulation (4) présente au moins un moyen de détection d'état (7) qui détecte un état atypique d'au moins un élément de manipulation (14a) ou de l'un des récipients manipulés par cet élément de manipulation, c'est-à-dire une erreur de l'élément de manipulation ou une forme erronée d'un récipient, ainsi qu'au moins un moyen de contrôle (20), lequel attribue à cet élément de manipulation (14a) ou au récipient manipulé par cet élément de manipulation (14a) au moins un récipient (10) à manipuler en amont de cet élément de manipulation (14a),
**caractérisé en ce que**
la première unité de manipulation (2) est un moyen de chauffage pour préformes, un moyen de soufflage pour récipients, un moyen de transport pour préformes, ou un moyen de nettoyage ou de désinfection pour récipients, et **en ce que** le dispositif présente un moyen d'extraction (16) agencé dans la direction de transport des récipients en amont de la seconde unité de manipulation (4), lequel extrait celui-là des récipients à manipuler par l'élément de manipulation (14a) qui rencontrera ultérieurement l'élément de manipulation défectueux de la seconde unité de manipulation (4), de sorte qu'un espace spécifique soit aménagé dans le flux de récipients, dans lequel le moyen de contrôle calcul un décalage de sorte que l'espace rencontre exactement un élément de manipulation défectueux.

2. Dispositif selon la revendication 1,
**caractérisé en ce que**
l'équipement de pilotage (20) fait que chaque n-ième récipient (10) est extrait, dans lequel n désigne le nombre des seconds éléments de manipulation (14a, 14b, 14c).

3. Dispositif selon l'une au moins des revendications précédentes,
**caractérisé en ce que**
la première unité de manipulation (2) et la seconde unité de manipulation (4) sont synchronisées entre elles.

4. Dispositif selon l'une au moins des revendications précédentes,
**caractérisé en ce que**
la seconde unité de manipulation (4) est un moyen de remplissage (4) pour les récipients (10).

5. Dispositif selon l'une au moins des revendications 2 à 4 précédentes,
**caractérisé en ce que**
le dispositif présente une unité de régulation (22) pour les récipients (10) extraits.

6. Dispositif selon l'une au moins des revendications 2 à 4 précédentes,
**caractérisé en ce que**
la première unité de manipulation (2) présente une pluralité d'éléments de manipulation (12a, 12b, 12c) pour manipuler les récipients.
